# FASCICULE DE BREVET EUROPEEN

(11) **EP 3 181 394 B1**
(45) Date de publication et mention de la délivrance du brevet: **05.12.2018**
(21) Numéro de dépôt: 16203478.9
(22) Date de dépôt: 12.12.2016
(51) Int. Cl.: B60N 2/06, B60N 2/30, B60N 2/16

(54) **BANQUETTE DE VEHICULE MODULABLE APTE A LIBERER UN PASSAGE AXIAL**
MODULIERBARE BANK EINES FAHRZEUGS, BEI DER EINE AXIALDURCHFÜHRUNG FREIGELEGT WERDEN KANN
MODULAR VEHICLE BENCH SEAT CAPABLE OF FREEING UP AN AXIAL PASSAGE

(30) Priorité: 18.12.2015 FR 1562799
(43) Date de publication de la demande: 21.06.2017
(73) Titulaire: Renault S.A.S., 92100 Boulogne-Billancourt (FR)
(72) Inventeur: BEZEAULT, LOIC, 78150 LE CHESNAY (FR); HEWAK, Gregor, 95490 VAUREAL (FR); QUINTIN, Thomas, 92410 VILLE D'AVRAY (FR)

(56) Documents cités:
- EP-A2- 0 943 483
- DE-A1-102007 053 958
- FR-A1- 2 939 083
- US-A- 2 116 366

## Description

L'invention concerne une banquette de véhicule modulable, apte à libérer un passage axial.
Dans un véhicule automobile à trois rangées de sièges, il est usuel de prévoir deux sièges distincts au premier rang, deux sièges distincts au troisième rang, et au deuxième rang une banquette à trois sièges. L'accès à la cabine se fait d'une part à hauteur du premier rang, d'autre part à hauteur du deuxième rang. L'accession au troisième rang, s'effectue, soit par l'arrière de la cabine, soit par un passage axial dans la banquette à trois sièges du deuxième rang. Le document DE 102007053958 A1 divulgue une banquette possédant trois sièges alignés, dont l'un est en position centrale et les deux autres sont en position latérale, chacun desdits sièges possédant une assise et un dossier, le dossier du siège central étant apte à être replié contre l'assise dudit siège central.

Une banquette de véhicule selon l'invention peut être transformée facilement et rapidement de manière à passer d'une configuration à trois sièges, à une configuration à deux sièges et dotée d'un passage axial
L'invention a pour objet une banquette possédant trois sièges alignés, dont l'un est en position centrale et les deux autres sont en position latérale, chacun desdits sièges possédant une assise et un dossier.
La principale caractéristique d'une banquette selon l'invention est que le dossier du siège central est apte à être replié contre l'assise dudit siège central, ladite banquette possédant des moyens de levage et de rotation permettant à l'ensemble constitué par ledit dossier replié contre l'assise d'être d'abord surélevé, puis de pivoter autour d'un axe longitudinal du véhicule pour venir se placer sur l'assise de l'un des deux sièges latéraux. Autrement dit, le siège central de la banquette peut passer d'une première position extrême correspondant à une position fonctionnelle, à une deuxième position extrême correspondant à une position escamotée sur l'assise de l'un des deux sièges latéraux. Ainsi, en partant de la première position extrême, le dossier central est d'abord replié sur l'assise centrale, puis l'ensemble constitué par ces deux éléments est d'abord soulevé pour arriver à hauteur de l'assise de l'un des deux sièges latéraux, avant de subir une rotation pour se retrouver dans la deuxième position extrême. Le passage axial est constitué par l'espace libéré par le siège central lorsqu'il se retrouve dans la deuxième position extrême.

Avantageusement, le dossier central et l'assise centrale s'étendent chacun dans un plan sensiblement horizontal lorsqu'ils sont repliés l'un contre l'autre. Le dossier central est rabattu sur l'assise centrale sans que celle-ci ne soit déplacée.

De façon avantageuse, au moins 75 % du volume de l'ensemble constitué par ledit dossier replié contre l'assise est placé au droit de l'assise de l'un des deux sièges latéraux. De cette manière, le siège central ne déborde quasiment pas de l'assise du siège latéral au dessus de laquelle il se retrouve, au niveau de l'espace constituant le passage axial.

Préférentiellement, dans la position surélevée le dossier central et l'assise centrale qui sont repliés l'un contre l'autre s'étendent chacun dans un plan sensiblement horizontal. L'ensemble constitué par le dossier replié sur l'assise est surélevé, en maintenant ledit dossier et ladite assise dans un plan horizontal.

De façon préférentielle, l'ensemble constitué par ledit dossier central replié contre l'assise centrale effectue une rotation de 90° depuis la position surélevée, pour se retrouver placé sur l'assise de l'un des deux sièges latéraux, si bien que ladite assise centrale et ledit dossier central s'étendent chacun dans un plan vertical et longitudinal du véhicule au dessus de ladite assise du siège latéral.

Avantageusement, l'ensemble constitué par ledit dossier replié contre l'assise repose sur l'assise du siège latéral. L'assise de l'un des deux sièges latéraux sert ainsi de pièce de soutien apte à supporter l'ensemble constitué par le dossier central replié contre l'assise centrale.

De façon préférentielle, les moyens de levage comprennent deux éléments de levage situés de chaque coté du siège central, chaque élément de levage comportant un support de bielles, une bielle avant, une bielle arrière et un support d'assise du siège central, constituant ensemble un polygone déformable pour assurer le déplacement du siège central vers le haut et vers l'avant. Ces moyens de levage permettent de surélever l'ensemble constitué par le dossier central replié sur l'assise centrale au moyen d'un basculement vers l'avant.

Préférentiellement, les moyens de rotation sont constitués par le support d'assise, comportant deux orifices circulaires alignés dans lesquels passe un tube définissant un axe de pivotement pour le basculement du siège central au-dessus d'un siège latéral.

De façon avantageuse, les polygones déformables sont logés dans des boîtiers munis d'ouvertures en arc.

L'invention a pour autre objet un véhicule comprenant une banquette conforme à l'invention.

D'autres caractéristiques et avantages de l'invention ressortent de la description qui suit faite avec référence aux dessins annexés dans lesquels :
La figure 1 est une vue de face d'une banquette à trois sièges, à passage axial libérable, selon un mode de réalisation de l'invention.
La figure 2 est une vue de face de la banquette de la figure 1 avec le dossier du siège central replié.
La figure 3 est une vue de face de la banquette de la figure 1 avec le siège central relevé vers l'avant.
La figure 4 est une vue de face de la banquette de la figure 1 avec le siège central basculé au-dessus d'un siège latéral.
La figure 5 est une vue latérale d'un mode de réalisation du siège central d'une banquette à trois sièges, après repliement du dossier.
La figure 6 est une vue latérale du siège central de la figure 5 après relèvement vers l'avant.
La figure 7 est une vue de face de la banquette à trois sièges avec le siège central dans la position correspondant à la figure 6.
La figure 8 est une vue de face de la banquette avec le siège central de la figure 7 basculé au-dessus d'un siège latéral.
La figure 9 est une vue perspective de l'armature du dispositif de libération du passage axial dans une banquette à trois sièges de véhicule automobile selon un mode de réalisation de l'invention.

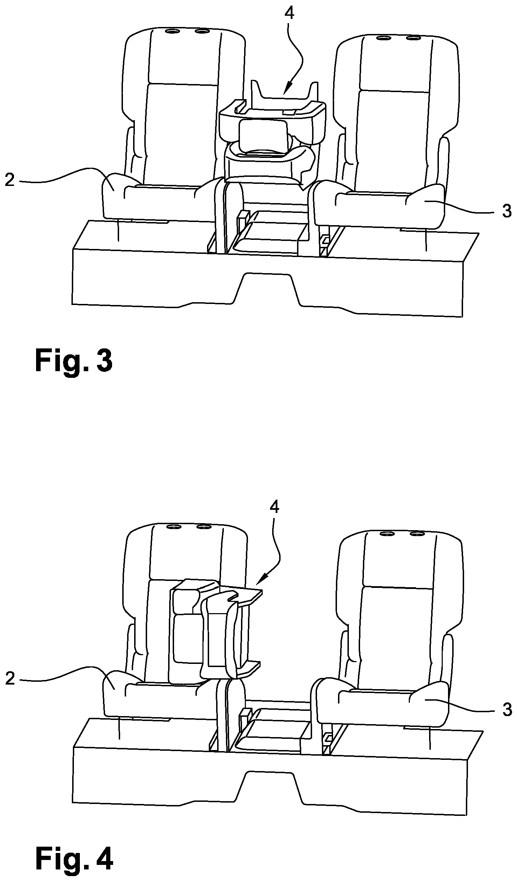

Dans un véhicule automobile à trois rangs de sièges, le deuxième rang est avantageusement constitué par une banquette 1 à deux sièges latéraux 2, 3 confortables, et un siège central 4 modifiable pour assurer la libération d'un passage axial d'accès aux sièges du troisième rang. Le siège central 4 comporte une assise centrale 5 et un dossier central 6. Selon l'invention, la banquette 1 dispose de moyens d'escamotage permettant au siège central 4 de passer d'une première position extrême correspond à une position fonctionnelle, à une deuxième position extrême, comme représentée à la figure 4, et correspondant à une position de repli sur l'assise de l'un des deux sièges latéraux 2, 3.

Les moyens d'escamotage comprennent des moyens de levage et des moyens de rotation.

Les moyens de levage comprennent deux éléments de levage placés de chaque coté du siège central 4, lesdits éléments étant réalisés sous la forme de deux polygones déformables pour assurer le déplacement du siège central 4 vers le haut et vers l'avant. Les moyens de rotation comprennent un axe de pivotement pour assurer le basculement du siège central 4 au-dessus d'un siège latéral 2, 3. Dans l'exemple de réalisation décrit, le basculement du siège central 4 est prévu au-dessus du siège latéral droit 2. Sur le côté gauche, près du siège latéral gauche 3, l'élément de levage gauche comprend un support gauche 7 de bielles, une bielle avant gauche 8, une bielle arrière gauche 9 et un support 10 gauche de l'assise 5 du siège central 4.

Le support gauche 7 de bielles est placé au niveau du plancher du véhicule, avantageusement sur une glissière axiale pour suivre les mouvements de la banquette 1 dans l'axe du véhicule.

Chacune des bielles avant 8 et arrière 9 est articulée d'une part sur le support gauche 7 de bielles, d'autre part sur le support gauche 10 de l'assise 5.

L'ensemble du support gauche 7 de bielles, des bielles 8 et 9, et du support gauche 10 de l'assise 5, constitue un polygone déformable.

Sur le côté droit, près du siège latéral droit 2, l'élément de levage droit comprend, de manière analogue, un support droit 11 de bielles, une bielle avant droite 12, une bielle arrière droite 13 et un support droit 14 de l'assise 5 du siège central 4. Sur l'exemple considéré, les moyens de rotation du siège central 4 comprennent un axe de pivotement pour le basculement du siège central 4 au-dessus du siège latéral 2, ledit axe étant défini par les deux orifices circulaires 15, 16, alignés et réalisés sur le support droit 14 de l'assise 5. L'assise 5 du siège central 4 comporte un arbre ou un tube logé dans les orifices 15, 16 et assurant le pivotement du siège 4. Le pivotement par rapport à l'axe 17 a une amplitude voisine de 90°. Après le pivotement, la majeure partie du siège central 4 se trouve au-dessus du siège latéral 2 et le centre de gravité du siège central basculé se trouve nettement décalé horizontalement de l'axe de pivotement 17. De ce fait, la position du siège central 4 après basculement est stable. L'axe de pivotement 17 est proche de la partie la plus basse de l'assise 5 du siège central 4 en position droite, et proche de la bordure gauche du siège latéral droit 2. Il en résulte qu'après basculement du siège central 4, l'assise 5 fait très peu saillie dans le passage axial ainsi libéré.

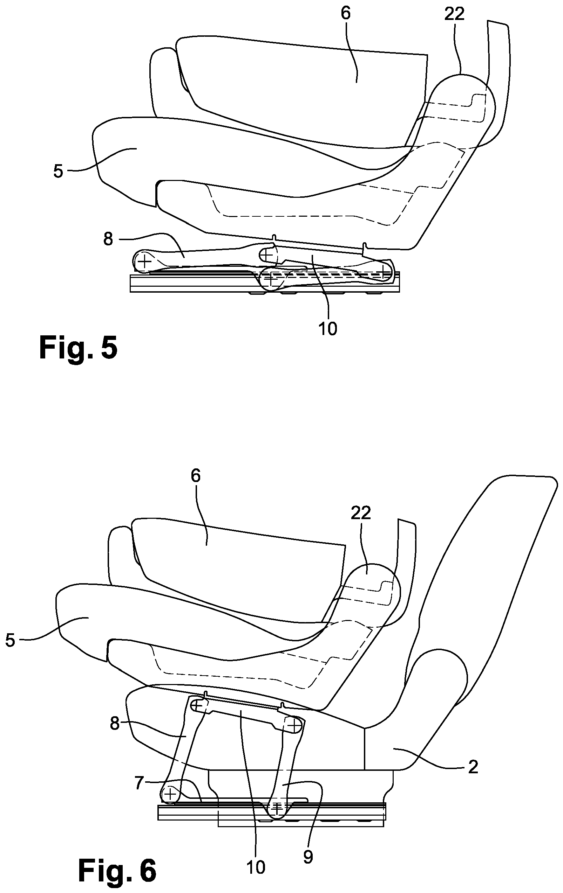

Les bielles 8, 9 et 12, 13 sont logées dans des boîtiers, respectivement gauche 18 et droit 19, munis d'ouvertures en arc pour le passage du siège central 4 de la position basse (figure 5) à la position haute (figure 6) où il est relevé vers l'avant. Dans la position basse, le siège central 4 repose sur des points d'appui tels que 20 et 21.

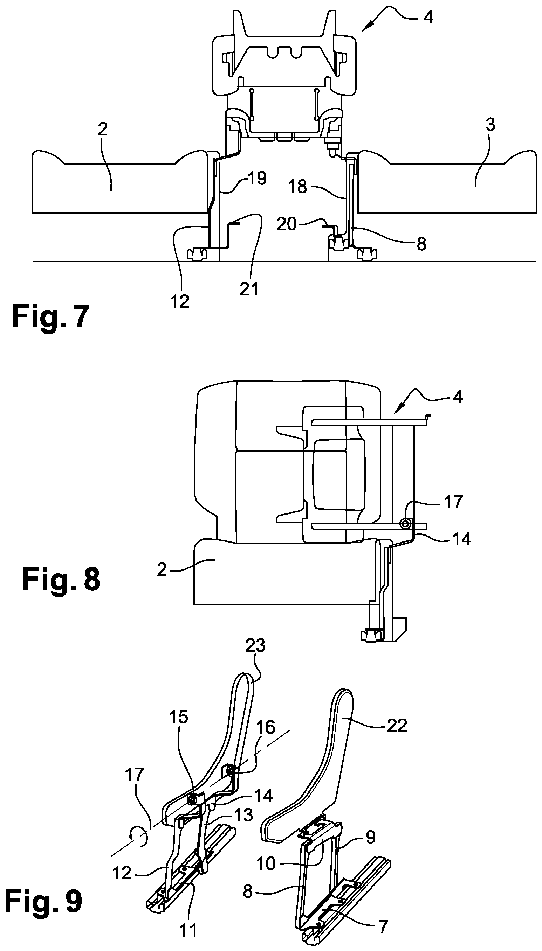

Sur la figure 9, le siège central 9 est symbolisé par le flasque gauche 22 et par le flasque droit 23.

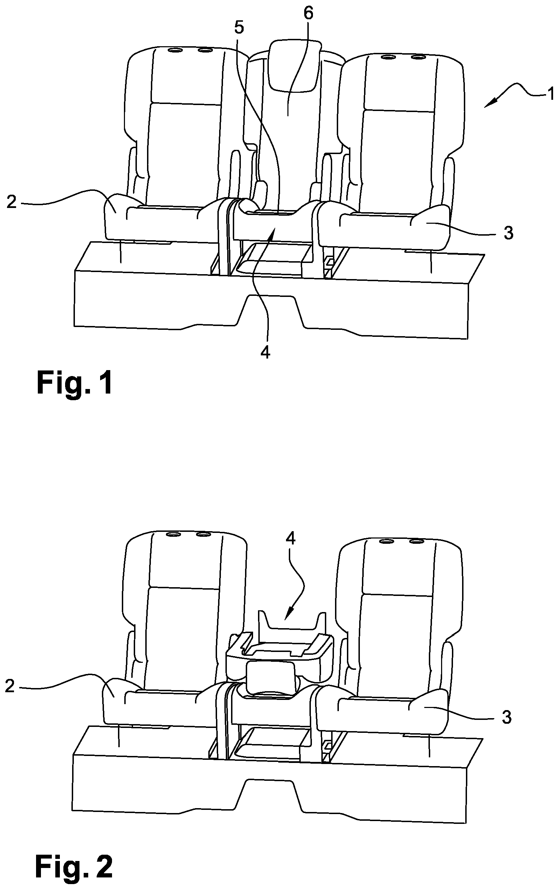

La libération d'un passage axial dans une banquette à trois sièges selon l'invention comprend les étapes suivantes:
en se référant aux figures 2 et 5, une étape de rabattement du dossier central 6 sur l'assise centrale 5, permettant d'obtenir un ensemble compact dans lequel le dossier central 6 et l'assise centrale 5 s'étendent chacun dans un plan horizontal,
en se référant aux figures 3, 6 et 7, une étape de surélévation dudit ensemble au moyen d'un basculement de celui-ci vers l'avant. Cette surélévation est obtenue grâce à la formation de chaque polygone droit et gauche sous le siège central 4, qui sont bien visibles sur les figures 6 et 9. Durant toute la phase de surélévation, l'assise centrale 5 et le dossier central 6 replié l'un contre l'autre demeurent chacun continuellement dans un plan horizontal,
en se référant aux figures 4 et 8, une étape de pivotement de l'ensemble constitué par le dossier central 6 replié sur l'assise centrale 5, après que ledit ensemble ait été surélevé. Ce pivotement s'effectue autour de l'axe constitué par l'arbre ou le tube placé dans les deux orifices 15, 16 du support droit 14 de l'assise centrale 5. L'amplitude de ce pivotement est de 90° plus ou moins 10°. Dans une position escamotée sur l'assise du siège latéral droit, le dossier central 6 et l'assise centrale 2 s'inscrivent chacun dans un plan vertical et longitudinal du véhicule.

La réinstallation du siège central 4 en position centrale de la banquette 1 est assurée au moyen des trois étapes précédentes effectuées dans l'ordre inverse.

## Revendications

1. Banquette (1) possédant trois sièges alignés (2, 3, 4), dont l'un (4) est en position centrale et les deux autres (2, 3) sont en position latérale, chacun desdits sièges (2, 3, 4) possédant une assise et un dossier, le dossier (6) du siège central (4) étant apte à être replié contre l'assise (5) dudit siège central (4), et la banquette (1) possédant des moyens de levage et de rotation permettant à l'ensemble constitué par ledit dossier (6) replié contre l'assise (5) d'être d'abord surélevé, puis de pivoter autour d'un axe longitudinal (17) du véhicule pour venir se placer sur l'assise de l'un des deux sièges latéraux (2, 3).

2. Banquette selon la revendication 1, **caractérisée en ce que** le dossier central (6) et l'assise centrale (5) s'étendent chacun dans un plan sensiblement horizontal lorsqu'ils sont repliés l'un contre l'autre.

3. Banquette selon l'une quelconque des revendications 1 ou 2, **caractérisé en ce qu'**au moins 75 % du volume de l'ensemble constitué par ledit dossier replié (6) contre l'assise (5) est placé au droit de l'assise de l'un des deux sièges latéraux (2, 3).

4. Banquette selon l'une quelconque des revendications 1 à 3, **caractérisé en ce que** dans la position surélevée le dossier central (6) et l'assise centrale (5) qui sont repliés l'un contre l'autre s'étendent chacun dans un plan sensiblement horizontal.

5. Banquette selon l'une quelconque des revendications 1 à 4, **caractérisé en ce que** l'ensemble constitué par ledit dossier central (6) replié contre l'assise centrale (5) effectue une rotation de 90° depuis la position surélevée, pour se retrouver placé sur l'assise de l'un des deux sièges latéraux (2, 3), si bien que ladite assise centrale (5) et ledit dossier central (6) s'étendent chacun dans un plan vertical et longitudinal du véhicule au dessus de ladite assise du siège latéral (2, 3).

6. Banquette selon l'une quelconque des revendications 1 à 5, **caractérisé en ce que** l'ensemble constitué par ledit dossier replié (6) contre l'assise (5) repose sur l'assise du siège latéral (2, 3).

7. Banquette selon l'une quelconque des revendications 1 à 5, **caractérisé en ce que** les moyens de levage comprennent deux éléments de levage situés de chaque coté du siège central (4), et **en ce que** chaque élément de levage comporte un support (7, 11) de bielles, une bielle avant (8, 12), une bielle arrière (9, 13) et un support (10, 14) d'assise du siège central (4), constituant ensemble un polygone déformable pour assurer le déplacement du siège central (4) vers le haut et vers l'avant.

8. Banquette selon la revendication 7 **caractérisé en ce que** les moyens de rotation sont constitués par le support (14) d'assise, comportant deux orifices circulaires (15, 16) alignés dans lequel passe un tube définissant un axe 17 de pivotement pour le basculement du siège central (4) au-dessus d'un siège latéral.

9. Banquette selon l'une quelconque des revendications 7 ou 8 **caractérisé en ce que** les polygones déformables sont logés dans des boîtiers (18, 19) munis d'ouvertures en arc.

10. Véhicule comprenant une banquette conforme à l'une quelconque des revendications 1 à 9.

## Patentansprüche

1. Bank (1) mit drei ausgerichteten Sitzen (2, 3, 4), von denen sich einer (4) in mittlerer Position und die beiden anderen (2, 3) in seitlicher Position befinden, wobei jeder der Sitze (2, 3, 4) eine Sitzfläche und eine Rückenlehne aufweist, wobei die Rückenlehne (6) des mittleren Sitzes (4) gegen die Sitzfläche (5) des mittleren Sitzes (4) umlegbar ist, wobei die Bank (1) Hebe- und Drehmittel aufweist, die es der Anordnung, die aus der gegen die Sitzfläche (5) umgelegten Rückenlehne (6) besteht, ermöglichen, zunächst angehoben zu werden und dann um eine Längsachse (17) des Fahrzeugs zu schwenken, um auf der Sitzfläche eines der beiden seitlichen Sitzen (2, 3) platziert zu werden.

2. Bank nach Anspruch 1, **dadurch gekennzeichnet, dass** sich die mittlere Rückenlehne (6) und die mittlere Sitzfläche (5) jeweils in einer im Wesentlichen horizontalen Ebene erstrecken, wenn sie gegeneinander umgelegt sind.

3. Bank nach einem der Ansprüche 1 oder 2, **dadurch gekennzeichnet, dass** mindestens 75 % des Volumens der Anordnung, die aus der gegen die Sitzfläche (5) umgelegten Rückenlehne (6) besteht, auf der Sitzfläche eines der beiden seitlichen Sitze (2, 3) platziert ist.

4. Bank nach einem der Ansprüche 1 bis 3, **dadurch gekennzeichnet, dass** sich in der angehobenen Position die mittlere Rücklehne (6) und die mittlere Sitzfläche (5), die gegeneinander umgelegt sind, jeweils in einer im Wesentlichen horizontalen Ebene erstrecken.

5. Bank nach einem der Ansprüche 1 bis 4, **dadurch gekennzeichnet, dass** die Anordnung, die aus der gegen die mittlere Sitzfläche (5) umgelegten mittleren Rückenlehne (6) besteht, aus der angehobenen Position heraus eine Drehung um 90° vollführt, um auf der Sitzfläche eines der beiden seitlichen Sitze (2, 3) platziert zu werden, so dass sich die mittlere Sitzfläche (5) und die mittlere Rückenlehne (6) jeweils in einer vertikalen Längsebene des Fahrzeugs oberhalb der Sitzfläche des seitlichen Sitzes (2, 3) erstrecken.

6. Bank nach einem der Ansprüche 1 bis 5, **dadurch gekennzeichnet, dass** die Anordnung, die aus der gegen die Sitzfläche (5) umgelegten Rückenlehne (6) besteht, auf der Sitzfläche des seitlichen Sitzes (2, 3) ruht.

7. Bank nach einem der Ansprüche 1 bis 5, **dadurch gekennzeichnet, dass** die Hebemittel zwei Hebeelemente umfassen, die beidseits des mittleren Sitzes (4) gelegen sind, und dass jedes Hebeelement einen Schubstangenträger (7, 11), eine vordere Schubstange (8, 12), eine hintere Schubstange (9, 13) und einen Sitzflächenträger (10, 14) des mittleren Sitzes (4) umfasst, die gemeinsam ein verformbares Polygon bilden, um die Verlagerung des mittleren Sitzes (4) nach oben und nach vorn sicherzustellen.

8. Bank nach Anspruch 7, **dadurch gekennzeichnet, dass** die Drehmittel durch den Sitzflächenträger (14) gebildet sind, der zwei kreisförmige ausgerichtete Öffnungen (15, 16) umfasst, durch die ein Rohr geht, das eine Schwenkachse (17) zum Kippen des mittleren Sitzes (4) über einen seitlichen Sitz definiert.

9. Bank nach einem der Ansprüche 7 oder 8, **dadurch gekennzeichnet, dass** die verformbaren Polygone in Gehäusen (18, 19) untergebracht sind, die mit bogenförmigen Öffnungen versehen sind.

10. Fahrzeug mit einer Bank nach einem der Ansprüche 1 bis 9.

## Claims

1. Bench seat (1) having three aligned seats (2, 3, 4) of which one (4) is in a central position and the other two (2, 3) are in a lateral position, each of the said seats (2, 3, 4) having a seating portion and a backrest, the backrest (6) of the central seat (4) being able to be folded down against the seating portion (5) of the said central seat (4), and the bench seat (1) having lifting and rotating means allowing the assembly made up of the said backrest (6) folded against the seating portion (5) to be first of all lifted up, then pivoted about a longitudinal axis (17) of the vehicle until it is positioned on the seating portion of one of the two lateral seats (2, 3) .

2. Bench seat according to Claim 1, **characterized in that** the central backrest (6) and the central seating portion (5) each extend in a substantially horizontal plane when folded one onto the other.

3. Bench seat according to either one of Claims 1 and 2, **characterized in that** at least 75% of the volume of the assembly made up of the said backrest (6) folded against the seating portion (5) is positioned in line with the seating portion of one of the two lateral seats (2, 3).

4. Bench seat according to any one of Claims 1 to 3, **characterized in that** in the lifted up position, the central backrest (6) and the central seating portion (5) which are folded one against the other each extend in a substantially horizontal plane.

5. Bench seat according to any one of Claims 1 to 4, **characterized in that** the assembly made up of the said central backrest (6) folded against the central seating portion (5) is rotated through 90° from the lifted-up position, until it is placed over the seating portion of one of the two lateral seats (2, 3), such that the said central seating portion (5) and the said central backrest (6) each extend in a vertical and longitudinal plane of the vehicle over the said seating portion of the lateral seat (2, 3).

6. Bench seat according to any one of Claims 1 to 5, **characterized in that** the assembly made up of the said backrest (6) folded against the seating portion (5) rests on the seating portion of the lateral seat (2, 3) .

7. Bench seat according to any one of Claims 1 to 5, **characterized in that** the lifting means comprise two lifting elements situated one on each side of the central seat (4), and **in that** each lifting element comprises a support (7, 11) of links, a front link (8, 12), a rear link (9, 13) and a central seat (4) seating portion support (10, 14), together constituting a deformable polygon for moving the central seat (4) upwards and forwards.

8. Bench seat according to Claim 7, **characterized in that** the rotation means consist of the seating portion support (14), comprising two aligned circular orifices (15, 16) through which there passes a tube that defines an axis 17 of pivoting for tilting the central seat (4) over a lateral seat.

9. Bench seat according to either one of Claims 7 and 8, **characterized in that** the deformable polygons are housed in casings (18, 19) equipped with arc-shaped openings.

10. Vehicle comprising a bench seat according to any one of Claims 1 to 9.
